# EUROPÄISCHE PATENTSCHRIFT

(11) **EP 1 047 651 B1**
(45) Veröffentlichungstag und Bekanntmachung des Hinweises auf die Patenterteilung: **18.06.2003**
(21) Anmeldenummer: 99944630.5
(22) Anmeldetag: 09.09.1999
(51) Int. Cl.: C04B 41/85

(54) **VERFAHREN ZUM FÄRBEN VON KERAMIKOBERFLÄCHEN**
METHOD FOR DYEING CERAMIC SURFACES
PROCEDE POUR TEINTER DES SURFACES CERAMIQUES

(30) Priorität: 10.09.1998 DE 19841321
(43) Veröffentlichungstag der Anmeldung: 02.11.2000
(73) Patentinhaber: BK Giulini Chemie GmbH & Co. OHG, 67065 Ludwigshafen (DE)
(72) Erfinder: STAFFEL, Thomas, D-67269 Grünstadt (DE); KLEIN, Thomas, D-69121 Heidelberg (DE); STRAUB, Jürgen, D-68305 Mannheim (DE); SCHMITTHÜSEN, Jens, D-56410 Montabaur (DE)
(86) Internationale Anmeldenummer: EP9906651
(87) Internationale Veröffentlichungsnummer: WO00015579

(56) Entgegenhaltungen:
- EP-A- 0 909 748
- DE-B- 1 178 766
- DE-C- 19 701 080

## Beschreibung

Der Gegenstand der vorliegenden Erfindung betrifft Verfahren zum Färben von Keramikoberflächen mittels wäßriger Lösungen von Metallverbindungen, die beim Brennen der Keramik färbende Pigmente ergeben, wobei in der Oberflächenschicht der Keramikkörper ein Mischphasenpigment aus der wäßrigen Färbelösung und einer löslichen Verbindung eines Lanthanidenions erzeugt wird, indem man die wäßrige Färbelösung und eine Lösung des Lanthanidenions zusammen oder nacheinander auf die Oberflächenschicht aufbringt und nach Trocknen des Lösungsmittels den Keramikkörper brennt.

Zur Färbung von keramischen Materialien werden in der Regel anorganische Pigmente verwendet, die bei den üblichen Brenntemperaturen von 700 bis 1400° C stabil sind. Im Stand der Technik werden dazu insbesondere die farbigen Oxide des Eisens, Chroms, Mangans, Rein- und Mischphasen mit Spinellstruktur, beispielsweise Verbindungen von Al, Ni, Cr, Zn, Co, Cu, Mn, Fe, U und V, eine Reihe von Silikaten, Sulfiden und Mischphasen mit farbgebenden Kationen in farblosen Wirtsgittern vom Rutiltyp wie TiO₂, SnO₂, ZrO₂, ZrSiO₄ und PbO₂ beschrieben.

Auch Oxide der Lanthanide können als Pigmente verwendet werden. Unter Lanthaniden werden im folgenden die Elemente Scandium, Yttrium, sowie die auf Lanthan folgenden 14 Elemente von Lanthan bis Lutetium, die als Oxide im wesentlichen die Wertigkeit 3+ haben verstanden. Sie weisen in dieser Oxidationsstufe die unterschiedlichsten Farben auf. Zum Beispiel ist N₂O₃rot-violett oder Pr₂O₃ grün-gelb. Im Gegensatz zu den Farben, die von den anderen Übergangsmetalloxiden erzeugt werden, sind die Oxide der Lanthanide selbst nur schwach gefärbt bzw. färbend

Es ist bereits aus der DE-19739124 bekannt, Oxide der Lanthanide zusammen mit kolloidalem Gold zur Purpurfärbung von Keramik einzusetzen. Diese Oxide sind in der Regel wasserunlöslich und werden als Pigmente durch unterschiedliche Verfahren auf die Keramikkörper aufgebracht. Die Pigmente basieren auf einem einbrennfähigen Trägermaterial, z. B. einem Glasfluß, welcher ein Oxidhydrat der Lanthaniden und eine Goldverbindung oder kolloidales Gold enthält. In diesem speziellen Verfahren werden die Oxidhydrate der Elemente Yttrium, Lanthan, Cer und Scandium eingesetzt.

Es ist weiterhin bekannt, daß Zirkonsilikate durch Einschluß von geringen Mengen von Übergangsmetalloxiden oder Oxiden der Lanthanide intensiv farbige Pigmente bilden. Die Pigmente werden hergestellt, indem man Zirkonoxid, Silicat und färbendes Metalloxid in Gegenwart von Mineralisatoren, vorzugsweise Alkalihalogeniden, Fluoriden, bei Temperaturen von 800 bis 1300°C zusammenbrennt. Es lassen sich je nach Wahl des Lanthaniden gelbe bis violette Pigmente herstellen (s. Pajakoff et al, Interceram Nr. 4, 1980, S. 488 bis 489; P. Kleinschmidt, Chemie in unserer Zeit, 1986, S. 182 - 190).

In der WO 97/08115 wird ein Beschichtungsverfahren zur Herstellung von keramischen Beschichtungen und die dafür geeigneten Beschichtungspulver beschrieben. Die Beschichtungspulver sind u. a. Oxide der Lanthanide. Das hier beschriebene Verfahren ist ein elektrostatisches Beschichten mit Oxidpulvern einer bestimmten Korngröße, unter Verwendung von speziell hierfür geeigneten Haftungsmitteln. Als Substrate werden die sog. brandfähigen Substrate eingesetzt, worunter man insbesondere emaillierfähige Metalle, sowie keramische Materialien, z. B. Glas, Feinkeramik (Porzellan, Bone China und Vitreous China), Baukeramik (Dachziegel, Fliesen), sowie Sanitärkeramik und Zierkeramik versteht. Der Vorteil dieser Technik besteht darin, daß man die Beschichtung der Substrate mit Pulvern erreicht, die besonders gut fluidisierbar sind, d. h. verflüssigt werden können. Aufgrund dieser guten Fluidisierung des Beschichtungspulvers kommt es während des Besprühens zu keinen technischen Problemen, die Oberfläche des Substrates ist glatt, nicht gewellt, ferner lässt sich so eine entsprechende Beschichtungstiefe auf der Oberfläche von 100 bis 700 um erzielen. Eine Nachbehandlung der Oberfläche ist jedoch nicht möglich.

Es ist auch schon bekannt, Lösungen von farbgebenden Metallverbindungen zur Färbung der keramischen Substrate einzusetzen (Th. Staffel et al., CFI DKG/ Berichte 4/93. Seite 146-148). Solche Lösungen können auch im Druckverfahren nur auf bestimmte Flächen der Rohkeramik aufgebracht werden, wo sie in die Oberfläche eindringen und nach dem Trocknen und Brennen eine Oberflächenschicht ergeben, die mit den farbigen Metalloxiden durchsetzt ist. Dies hat den Vorteil, daß die Oberfläche behandelt, beispielsweise durch Schleifen geglättet werden kann, ohne daß die Muster zerstört werden. Zur Rotbraunfärbung werden beispielsweise Eisenverbindungen wie Eisencitrat, zur Rotfärbung Eisen/Mangan-Verbindungen, zur Blaufärbung Cobaltverbindungen eingesetzt. Zur Rosafärbung vergleiche DE-OS 195 46 325, zur Schwarzfärbung DE-OS 196 25 236. Obwohl die Färbemöglichkeiten nach dieser Verfahrensvariante relativ groß sind und sich eine größere Anzahl von Farben herstellen läßt, ist durch die Beschränkung auf oxidische Farben die Farbpalette beschränkt.

In der DE 197 01 080 C1 wurde ein Verfahren zum Färben von Keramikoberflächen beschrieben, bei dem in der Oberflächenschicht der Keramikmasse ein als Wirtsgitter dienendes, im Spinell- oder Rutilgitter kristallisierendes farbloses Oxid mit einer wäßrigen Färbelösung, welche eine Mischung einer löslichen Verbindung eines das Wirtsgitter färbenden zwei- oder dreiwertigen Metallions mit einer löslichen Verbindung eines fünfoder sechswertigen Metallions zum elektrostatischen Ausgleich enthält, angefärbt wird, indem man entweder das farblose Oxid in feinverteilter Form in die Keramikmasse einarbeitet und die wäßrige Färbelösung auf die Oberflächenschicht aufbringt, oder die wäßrige Färbelösung mit einer zur Bildung der Wirtsgitter ausreichenden Menge einer löslichen Verbindung der das Wirtsgitter bildenden Metallionen versetzt und diese Mischung auf die Oberfläche aufträgt, und nach Trocknen des Lösungsmittels der Keramikkörper bei 300 bis 1400° C und einer Brenndauer von 0,5 bis 5 Stunden gebrannt wird. Als Färbelösungen werden die löslichen Salze der Übergangsmetalle eingesetzt. Eine Kombination von Antimon- und Chromsalzen auf Titanoxid erzeugt die Farbe gelb. Der Vorteil dieses Verfahrens besteht darin, daß die Färbelösungen recht gleichmäßig und lokal begrenzt auf die Oberfläche aufgetragen (geprüht, getaucht etc.) werden können und die so erzeugten Farbschichten eine Tiefe von 0,5 bis 2 mm aufweisen. Diese Tiefe erlaubt es, die Keramikoberfläche nachträglich durch Schleifen und Polieren zu bearbeiten. aber auch gewisse Oberflächenmuster zu erzeugen, ohne an Farbintensität zu verlieren. Die gemäß diesem Verfahren erzeugten Farben sind in der Regel recht intensiv. Nachteilig an diesem Verfahren ist die Begrenzung auf Färbelösungen, deren Mischungs-Komponenten sich zum Rutilgitter ergänzen.

Es ist mit den oben beschriebenen Verfahren aber nicht möglich, matte Farbtöne oder Pastelltöne, Lüstereffekte ohne Beteiligung von Edelmetallen oder auch nur Farbabstufungen zu erzeugen. Es ist oft auch nur eine gewisse Aufhellung oder Entfärbung der Keramiksubstrate erwünscht, die man mit diesen Färbemethoden nicht erreichen kann.

Es stellte sich daher die Aufgabe, neue Färbelösungen für Keramikoberflächen zu finden, die die Auswahl der zur Verfügung stehenden Färbungen erweitert.

Es bestand weiterhin die Aufgabe, ein Verfahren zu finden, mit dessen Hilfe es möglich ist. Pastelltöne auf Keramiksubstraten zu erzeugen, bzw. eine Aufhellung oder Entfärbung der Substrate zu erreichen, ohne die aufwendige elektrostatische Pigmentauftragstechnik einzusetzen.

Diese Aufgaben werden mit den Merkmalen des Hauptanspruchs gelöst und mit denen der Unteransprüche gefördert.

Es hat sich überraschend gezeigt, daß es möglich ist, Lösungen von Metallverbindungen, die beim Brennen der Keramik färbende Pigmente ergeben mit Salzen der Lanthanide auf keramische Oberflächen aufzutragen und damit in der Oberflächenschicht der Keramikkörper durch Brennen bei 800 bis 1400 °C Mischphasenpigmente zu erzeugen, die eine von der Färbung der Bestandteile abweichende Färbung aufweisen.

Als Färbelösung werden vorzugsweise wäßrige Lösungen von Salzen der Übergangsmetalle, beispielsweise von Fe, Mn, Mo, Co, Cr, verwendet.

Der Farbeindruck dieser sich aus den Salzen bildenden Mischoxide, die normalerweise sehr farbintensiv sind, kann durch den Zusatz von farblose Wirtsgitter bildende Zusätze verändert werden, so daß sich andere Farben, insbesondere aber Pastelltöne ergeben, welche die zur Färbung von Keramik bekannte Farbpalette vorteilhaft erweitern. Als Wirtsgitter kommen insbesondere Oxide wie ZrO₂, TiO₂, SnO₂ oder (Zr, Si)O₂ in Frage. Beim Brennen der Keramik bilden sich dann Mischoxide, in denen die färbenden Metalle und die Lanthanide Fehlstellen im Wirtsgitter besetzen und dieses anfärben, wobei Färbungen ergeben, die von denen der reinen Metalloxid-Pigmente abweichen.

Das Verfahren ist dadurch gekennzeichnet, daß man die wäßrigen Lösungen der färbenden Metalle und der Lanthanide sowie gegebenenfalls der die Wirtsgitter bildenden Salze durch Tauchen, Sprühen oder Aufstreichen auf das Keramiksubstrat aufbringt und nach Trocknung des Lösungsmittels das Keramiksubstrat zwischen 800 und 1400 °C, vorzugsweise bei einer Brenndauer von 0,5 bis 2,5 Stunden brennt.

Als färbende Komponenten sind alle üblichen als Lösung auftragbaren färbende Metalloxide ergebende Verbindungen einsetzbar. Bevorzugt werden dafür wasserlösliche Salze, die organischen Anionen enthalten, verwendet. Eisencitrat, Mangancarbonat und Chromacetat seien beispielhaft genannt. Als wasserlösliche Salze der Lanthaniden werden vorzugsweise die Acetate, Citrate, Oxalate oder Lactate eingesetzt. Teilweise wirken auch die in der Keramikmasse als Verunreinigung enthaltenen Metallionen, insbesondere Felonen, als farbgebende Komponente mit, was bei der Zusammensetzung der aufzutragenden Lösungen mitberücksichtigt werden muß. Salze mit anorganischen Anionen wie Chlorid oder Nitrat können jedoch ebenfalls verwendet werden, soweit man die mit der Verdampfung verbundenen Nachteile in Kauf nehmen will. Vorzugsweise wird das Oxalat als Anion eingesetzt. Die Lösung enthält 1 - 20, vorzugsweise 5 - 10 % der farbgebenden Verbindung.

Die Salze der das Wirtsgitter bildenden Verbindungen von Zr, Ti, Sn enthalten vorzugsweise ebenfalls organische, beim Brennen in CO₂ und H₂O übergehende Anionen, wie Acetat, Citrat, Oxalat und Lactat, wobei komplexbildende Anionen, die auch höhere Konzentrationen dieser Kationen in wäßriger Lösung stabilisieren, bevorzugt sind.

So läßt sich beispielsweise Ti mit Milchsäure chelatisieren (CA Reg. Nr. 85104) und als bis zu 8,2 Gew.-% Ti enthaltende wäßrige Lösung stabilisieren. Zirkonoxide sind aus den stabilen Zirkonacetaten leicht erhältlich und als Wirtsgitter bevorzugt. Die Wirtsgitter werden entweder in einer Menge von 2 - 10, insbesondere 5 % dem Ton als feingemahlene Pulver beigemischt oder als Lösung ein- oder mehrfach aufgetragen und getrocknet, bis eine Konzentration von 1 - 10, insbesondere 5 % der Oberflächenschicht erreicht ist.

Als besonders günstig hat sich bei den bevorzugten Zirkonwirtsgittern die MitVerwendung von löslichen Titan-Komplexsalzen als Farbregler erwiesen.

Weiterhin hat sich herausgestellt, daß ein Zusatz von Kaliumnitrat, Natriumfluorid oder ähnlichen Substanzen, welche als Mineralisatoren wirken, die Bildung der Mischphasenpigmente auch in der Tonmatrix fördern. Die Mischphasenfärbung wird durch diesen Zusatz verstärkt, möglicherweise dadurch, daß das Aufwachsen einer Mischphase auf die vorhandenen Wirtsgitter gefördert wird.

Die Färbelösungen werden durch Sprühen, Tauchen, Malen, Drucken usw. nur auf die Teile der Oberfläche aufgetragen, die eingefärbt werden sollen, wobei die Lösungen je nach aufgetragener Menge mehr oder weniger tief in die Keramikmasse eindringen.

Verfärbungen treten so üblicherweise bis zu einer Tiefe von 0,5 bis 2 mm (Oberflächenschicht) ein, so daß sowohl eine Musterung der Oberfläche als auch eine Bearbeitung beispielsweise durch Schleifen oder Polieren möglich ist.

Durch das Brennen werden die organischen Liganden der Metallverbindung verbrannt bzw. anorganische Anionen verdampft und die zurückbleibenden Metalloxide als Mischoxide auf der silikatische Phase der Keramik abgelagert oder eingebaut.

Die erfindungsgemäß gebildeten Mischphasenpigmente erlauben es, das Spektrum der nachträglichen Färbungen von Keramikoberflächen außerordentlich zu erweitern und eine Vielzahl neuer Farbtöne gezielt aufzubringen.

Die folgenden Versuche verdeutlichen den Erfindungsgegenstand näher, ohne diesen zu beschränken. "%" bedeutet bei allen Lösungen Masse der Feststoffe in g bezogen auf 100 ml der Lösung oder bei Feststoffen Masse%.

### I. Farbmessungen:

Der erhaltene Farbton wurde mit einem Minolta-Chroma-Meter CR 200 ermittelt, wobei die CIE-Normlichtart C (6774K) verwendet wurde. Bei der Ermittlung der Werte wurde das in ISO- und DIN-Normen empfohlene L*a*b*-Farbsystem verwendet. Das L*a*b*-Farbsystem stellt einen Farbkörper dar, durch den drei Achsen gelegt wurden. Die senkrechte Achse ist die L*-Achse und steht für die Helligkeit der Farbe. Die Achsen a* und b* sind in der horizontalen Ebene (Farbkreis) untergebracht, wobei a* für den Farbton und b* für die Sättigung steht.
Ein typisches Zitronengelb hat beispielsweise die Helligkeit L* 81,5; einen a*-Wert um 0 und einen hohen b*-Wert von 62,5

### II. Resultate der Brennversuche

### Beispiel 1: Kombinationen von Lanthaniden, Zirkon und Cobalt

Die Lanthanide werden als Acetat in 20% wäßriger Lösung verwendet (Cer 9%ig). Zirkon wird als Acetat in 40%iger Lösung und Cobalt als Hydroxid in 73%iger Lösung (Merapon 2005® der BK Giulini GmbH & Co.OHG) eingesetzt.

Je 1/3 einer weißen Fliese (10/10 cm, von Fa. Casalgrande, Typ weiß brennend) wird
a) mit einer Lösung der in der folgenden Tabelle angegebenen Lanthanide,
b) einer Lösung von Zirkonacetat und anschließend mit der Lösung der Lanthanide und
c) einer Lösung von Zirkonacetat und anschließend einer Mischung von Lanthaniden und Cobalt,
d) einer Lösung der Lanthanide und Cobalt,
e) einer Cobaltlösung
besprüht, getrocknet und 360 min. bei 600° C und 60 min. bei 1140° C gebrannt. Es ergeben sich die in der Tabelle 1 angegebenen Farben. Eine Färbung mit der Cobaltlösung allein ergibt eine dunkelblaue Farbe.

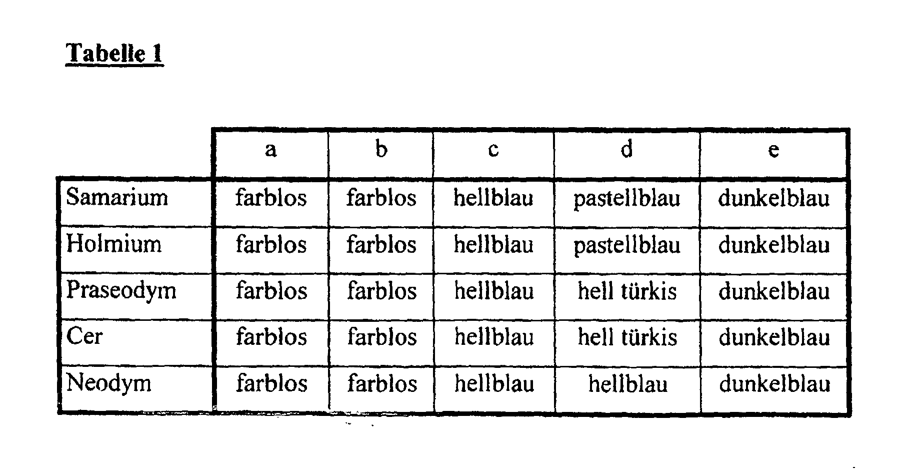

### Beispiel 2: Vergleich von Keramikfärbungen durch Zugabe von Pigmenten mit Einfärbung durch Lösungen

Zirkon wird als 40%ige wäßrige Lösung de Acetats, Eisen als 9,2%ige Lösung von ammonialkalischem Citrat, Merapon® 2020, Mangan als 5%ige Lösung von Mangancarbonat (Merapon® 1188), Chrom als Citrat in 5.1%iger Lösung zusammen mit Eisencitrat in 4,5%Lösung gesetzt (Merapon® 2009) und die Lanthanide als Acetate in 20%iger Lösung (Cer 9%) eingesetzt. Calcium und Magnesium werden als Acetate in 5%iger Lösung zugefügt.

Weiße Fliesen gemäß Beispiel 1 werden mit der Zirkonlösung getränkt und getrocknet. Danach wird eine Lösungsmischung der übrigen Salze aufgesprüht, getrocknet und wie in Beispiel 1 gebrannt. Das SiO₂ ist als mineralischer Bestandteil in der Fliese enthalten. Als Vergleich sind die literaturbekannten Pigmentfarben mit aufgeführt, die beim Calcinieren entsprechender Rohstoffe entstehen. Sie weichen für alle Zusammensetzungen deutlich von den Lösungsfärbungen ab.

**Tabelle 2**

| | | Farbe (lt. Literatur) | Farbe aus Lösung nach dem Brand | Anmerkung |
|---|---|---|---|---|
| 1 | ZrO₂ - SiO₂ - CeO₂ - Pr₆O₁₁ | gelb-orange | hellgelb | Ce + Pr |
| 2 | ZrO₂ - SiO₂ - Pr₆O₁₁ - MoO₃ | gelb | blau-grau | Pr + Mo |
| 3 | ZrO₂ - SiO₂ - Nd₂O₃ | rosa-violett | hellblau | Nd |
| 4 | ZrO₂ - SiO₂ - Nd₂O₃ - Pr₆O₁₁ | rot-orange | blau-grau | Nd + Pr |
| 5 | ZrO₂ - SiO₂ - CeO₂ - Er₂O₃ | rosa-rot | beige-rosa | Ce + Er |
| M = Merapon® | | | | |

### Beispiel 3: Heterotype Mischphasenbildung in Wirtsgittern mit Rutil-Struktur

In die Wirte mit Rutil-Struktur (TiO₂ / ZrO₂) werden mit ihnen in der Struktur nicht übereinstimmende Einzelverbindungen(Struktur des Gastes hat keine Ähnlichkeit mit dem Wirt) in einer solchen Menge beigefügt, daß das Verhältnis der Kationen zu den Anionen der Wirtsgitter von 1 : 2 nicht verändert wird. Bei den zugegebenen Verbindungen wird zwischen Dotierung (in Citronensäure gelöste Lanthanide in Mengen von 33 % der Wirtssubstanz) und Metall (zusätzliches bekanntes farbgebendes Metalloxid in einer Menge von 10 % der Wirtssubstanz) unterschieden. Alle Komponenten werden in einer Lösung vereint und so auf die Keramikfliese aufgetragen, daß ca. 5 % feste Substanz in der Oberfläche der Fliese bezogen auf die Tonmasse enthalten ist. Danach wird wie unter Brennprogramm angegeben getrocknet und gebrannt. Die Farbwerte der Versuche in Tabelle 3 ist in der Tabelle 4 wiedergegeben.

Bei 5 g Einwaage: 0,50 g Metall
3,38 g Wirt
1,12 g Dotierung
Wirt: TiO₂, ZrO₂
Dotierung: in Citronensäure gelöste Verbindungen der Lanthanide
Als Metall (hier: Fe = Merapon® 2020, Au = Targon® rosa)
bezogen auf keramische Masse (bei ZrO₂ als Wirt-Zusatz von 5 %, 10 %. 50 %)
Brennprogramm:
Trocknen: 20 min (70° C)
Aufheizen: 95 min (1220° C)
Garbrand: 10 min (1220° C)
Abkühlen: 10 Std. (auf 20° C)

**Tabelle 3**

| Aufgepinselt auf Casalgrande Fliesen | | | | |
|---|---|---|---|---|
| Wirt | | | | |
| Dotierung | Metall | Zr | Ti | Zr + Ti |
| Nd | Au | 1 + | 2 ++ | 3 +++ |
| Nd | Fe | 4 --- | 5# | 6 + |
| Er | Au | 10 + | 11 ++ | 12* -- |
| Er | Fe | 13 - | 14 + | 15* - |
| Pr | Au | 19 ++ | 20 ++ | 21 + |
| Pr | Fe | 22 - | 23 +++ | 24 + |

| | | | | |
|---|---|---|---|---|
| * gelartig | | | | |

### Eindringverhalten:

| | | | | | | |
|---|---|---|---|---|---|---|
| --- | -- | - | # | + | ++ | +++ |
| sehr schlecht | | | bis | | | sehr gut |

### Beispiel 4: Heterotype Mischphasenbildung in Wirtsgittern mit Rutil-Struktur

Der Versuch von Beispiel 3 wird wiederholt, wobei das Wirts/Dotierungsverhältnis auf 2/1 und die Metallzusätze auf 25 % verändert wurden. Die Farbmessungen der vorstehenden Versuche gemäß Tabelle 5 sind in der Tabelle 6 wiedergegeben.

Bei 5 g Einwaage: 1,25 g Metall
2,32 g Wirt
1,43 g Dotierung
Wirt: TiO₂, ZrO₂
Dotierung: in Citronensäure gelöste Verbindungen der Lanthanide
als Merapon (hier: Fe = Merapon 2020, Au = Targon rosa)
bezogen auf keramische Masse (bei ZrO₂ als Wirt-Zusatz von 5 %, 10 % .... 50 %)
Brennprogramm:
Aufheizen: 95 min (1220° C)
Garbrand: 10 min (1220° C)
Abkühlen: 10 Std. (auf 20° C)

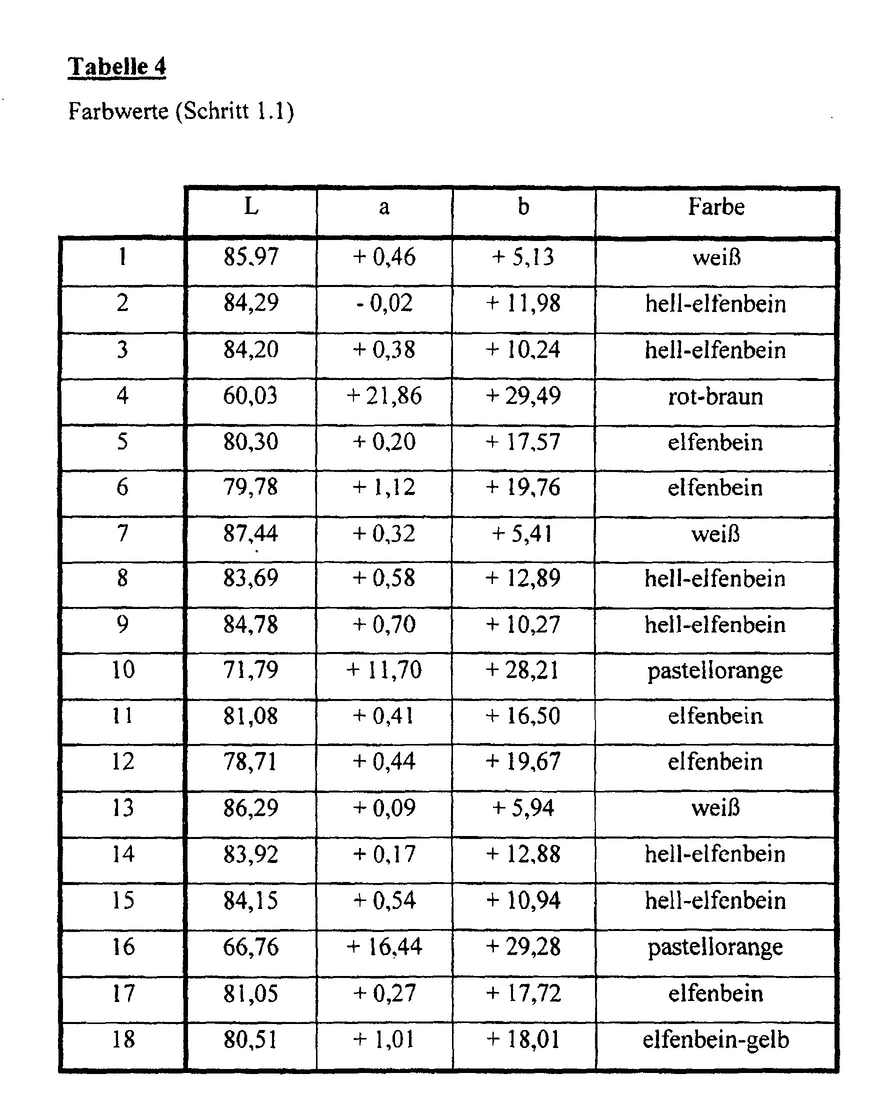

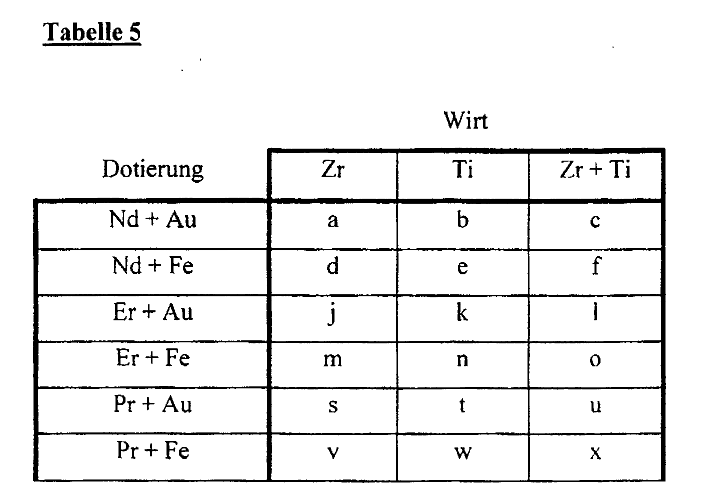

### Eindringverhalten:

| | | | | | | |
|---|---|---|---|---|---|---|
| --- | -- | - | # | + + | ++ | +++ |
| sehr schlecht | | | bis | | | sehr gut |

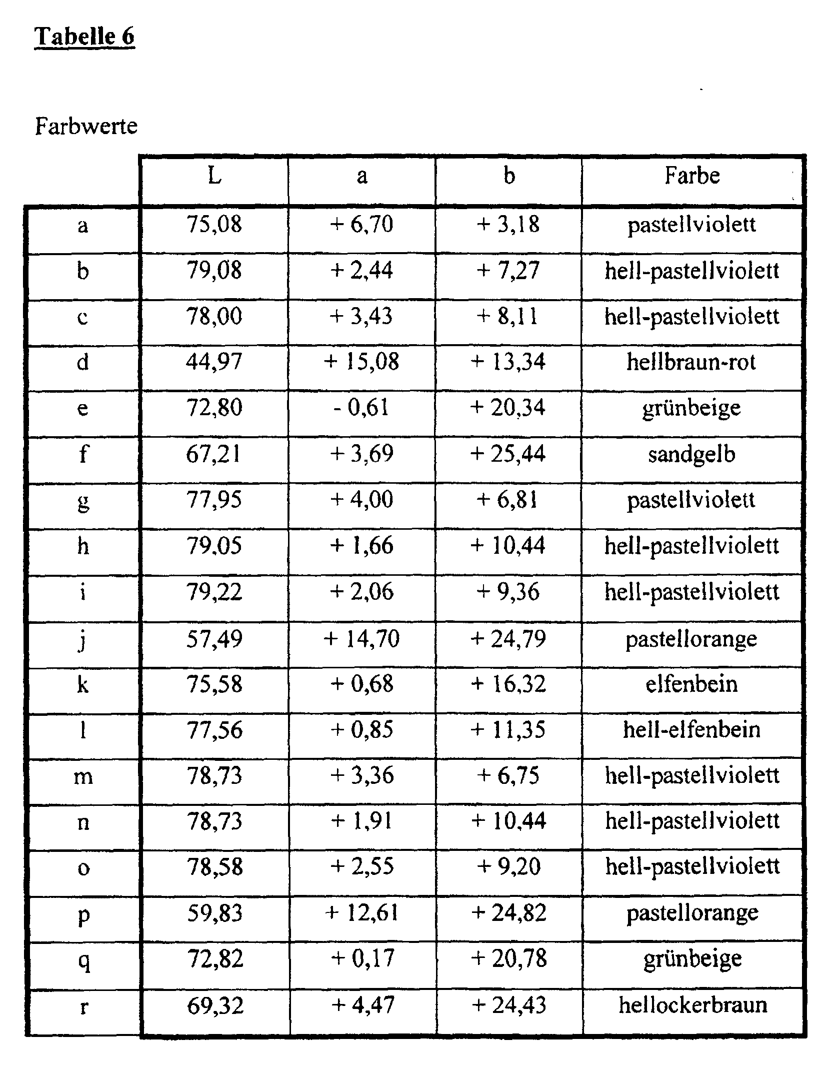

## Patentansprüche

1. Verfahren zum Färben von Keramikoberflächen mittels wäßriger Lösungen von Metallverbindungen, die beim Brennen der Keramik färbende Pigmente ergeben, **dadurch gekennzeichnet, daß** in der Oberflächenschicht der Keramikkörper ein Mischphasenpigment aus der wäßrigen Färbelösung und einer löslichen Verbindung eines Lanthanidenions erzeugt wird, indem man die wäßrige Färbelösung und eine Lösung des Lanthanidenions zusammen oder nacheinander auf die Oberflächenschicht aufbringt und nach Trocknen des Lösungsmittels der Keramikkörper bei 800 bis 1400° C gebrannt wird.

2. Verfahren gemäß Anspruch 1, **dadurch gekennzeichnet, daß** die Brenndauer von 0,5 bis 5 Stunden beträgt.

3. Verfahren gemäß einem der Ansprüche 1 bis 2, **dadurch gekennzeichnet, daß** die Färbelösung Fe-, Mo-, Mn-, Co- und Cr-Ionen enthält.

4. Verfahren gemäß einem der Ansprüche 1 bis 3, **dadurch gekennzeichnet, daß** zusätzlich eine Verbindung enthalten ist, die beim Brennen ZrO₂, TiO₂, SnO₂, oder ZrSiO₄ bildet.

5. Verfahren gemäß einem der Ansprüche 1 bis 3, **dadurch gekennzeichnet, daß** das durch ein oder mehrfaches Tränken mit den jeweiligen Lösungen und Trocknen eine Konzentration von 1 bis 10 %, vorzugsweise 5 %, der jeweiligen Mischoxidbestandteile bezogen auf die Oberflächenschicht erreicht wird.

6. Verfahren nach einem der Ansprüche 1 bis 4, **dadurch gekennzeichnet, daß** die Färbelösung 1 bis 20 Gew.-%, vorzugsweise 5 bis 10 % der jeweiligen Lanthanidenverbindungen enthält.

7. Verfahren gemäß einem der Ansprüche 1 bis 6, **dadurch gekennzeichnet, daß** die Färbelösung zusätzlich Mineralisatoren enthält.

8. Verfahren nach einem der Ansprüche 1 bis 6, **dadurch gekennzeichnet, daß** die Färbelösung zusätzlich ein komplexgebundenes Titan, insbesondere Kaliumtitanoxalat oder Dihydroxy-bis(ammoniumlactato)-titanat enthält.

## Claims

1. Process for colouring ceramic surfaces by means of aqueous solutions of metal compounds which generate colouring pigments on firing of the ceramic, **characterized in that** a mixed phase pigment is created in the surface layer of the ceramic body from the aqueous colorant solution and a soluble compound of a lanthanide ion by applying the aqueous colorant solution and a solution of the lanthanide ion to the surface layer together or in succession and, after drying of the solvent, firing the ceramic body at 800 to 1400°C.

2. Process according to Claim 1, **characterized in that** the firing time is 0.5 to 5 hours..

3. Process according to either of Claims 1 to 2, **characterized in that** the colorant solution contains Fe, Mo, Mn, Co and Cr ions.

4. Process according to any of Claims 1 to .3, **characterized in that** it additionally contains a compound which forms ZrO₂, TiO₂, SnO₂ or ZrSiO₄ on firing.

5. Process according to any of Claims 1 to 3, **characterized in that** single or repeated saturation with the respective solutions and drying provides a concentration of 1 to 10%, preferably 5%, for the respective mixed oxide constituents, based on the surface layer.

6. Process according to any of Claims 1 to 4, **characterized in that** the colorant solution contains 1 to 20% by weight, preferably 5 to 10%, of the respective lanthanide compounds.

7. Process according to any of Claims 1 to 6, **characterized in that** the colorant solution additionally contains mineralizers.

8. Process according to any of Claims 1 to 6, **characterized in that** the colorant solution additionally contains complexed titanium, especially potassium titanium oxalate or titanium dihydroxy bis(ammonium lactate).

## Revendications

1. Procédé pour la coloration de surfaces céramiques au moyen de solutions aqueuses de composés métalliques produisant des pigments colorants à la cuisson de la céramique, **caractérisé en ce qu'**un pigment de phase mixte est généré à partir de la solution aqueuse et d'un composé soluble d'un ion de Lanthanide dans la couche de surface du corps céramique, en appliquant la solution colorante aqueuse et une solution de l'ion de Lanthanide ensemble ou successivement sur la couche de surface et par cuisson du corps céramique à une température comprise entre 800° C et 14000° C après séchage de l'agent solvant.

2. Procédé selon la revendication 1, **caractérisé en ce que** 1 durée de cuisson est comprise entre 0,5 heure et 5 heures.

3. Procédé selon l'une des revendications 1 à 2, **caractérisé en ce que** la solution colorante contient des ions de Fe, Mo, Mn, Co et Cr.

4. Procédé selon l'une des revendications 1 à 3, **caractérisé en ce qu'**un composé additionnel est contenu, lequel forme du ZrO₂, TiO₂, SnO₂, ou du ZrSiO₄ à la cuisson.

5. Procédé selon l'une des revendications 1 à 3, **caractérisé en ce qu'**une concentration de 1 à 10 %, préférentiellement 5 % de la couche de surface des différents composants d'oxydes mixtes est obtenue par un ou plusieurs trempages avec les solutions correspondantes et par séchage.

6. Procédé selon l'une des revendications 1 à 4, **caractérisé en ce que** la solution colorante contient en poids de 1 à 20 %, préférentiellement de 5 à 10 % des différents composés de Lanthanide.

7. Procédé selon l'une des revendications 1 à 6, **caractérisé en ce que** la solution colorante contient des minéralisateurs additionnels.

8. Procédé selon l'une des revendications 1 à 6, **caractérisé en ce que** la solution colorante contient un titane complexé additionnel, notamment titanoxalate de potassium ou dihydroxy-bis(lactate d'ammonium)-titanate.
